# EUROPEAN PATENT APPLICATION

(11) **EP 4 661 494 A1**
(43) Date of publication of application: **10.12.2025**
(21) Application number: 23920464.7
(22) Date of filing: 09.02.2023
(51) Int. Cl.: H04W 36/00

(54) **PROCESSING METHOD, COMMUNICATION DEVICE AND STORAGE MEDIUM**

(71) Applicant: Shenzhen Transsion Holdings Co., Ltd., Shenzhen, Guangdong 518057 (CN)
(72) Inventor: WU, Wen, Shenzhen, Guangdong 518057 (CN)
(74) Representative: Osterhoff, Utz
(86) International application number: PCT/CN2023/075267
(87) International publication number: WO 2024/164256

(57) **Abstract**

Disclosed in the present application are a processing method, a communication device and a storage medium. The method includes: a network device sends candidate cell grouping information, such that a terminal executes preset processing on the basis of the candidate cell grouping information. The technical solution of the present application can reduce the impact of ping-pong switching on LTM, and/or reduce the measurement time delay and/or signaling overhead.

## Description

### TECHNICAL FIELD

The present application relates to the technical field of communication, and in particular to a processing method, a communication device and a storage medium.

### BACKGROUND

Measurement delay refers to the time required for the user equipment (UE) to perform measurement, trigger measurement report and trigger cell handover after a better cell appears, which contributes to the smoothing mobility delay.

In the process of conceiving and implementing the present application, the inventors found that there are at least the following problems: In the current L1/L2-triggered mobility (LTM), the L1 measurement delay is part of the overall mobility delay. Assuming that L1 measurement/reporting is used to trigger LTM to reduce the measurement delay, frequent ping-pong handover may occur due to unstable L1 measurement.

Therefore, a solution needs to be provided to solve the technical problem of ping-pong handover caused by using L1 measurement/reporting to trigger LTM, so as to reduce mobility delay.

The preceding description is intended to provide general background information and does not necessarily constitute related art.

### SUMMARY

The main purpose of the present application is to provide a processing method, a communication device and a storage medium, aiming to solve the technical problem of ping-pong handover caused by applying L1 measurement/reporting to trigger L1/L2-triggered mobility (LTM) and reduce mobility delay.

The present application provides a processing method, which can be applied to a communication device (such as a terminal, specifically a mobile phone), including the steps of:
S20: performing preset processing based on candidate cell grouping information.

In an embodiment, the step S20 includes:
S21: determining processing parameters according to a serving cell and the candidate cell grouping information; and
S22: performing the preset processing based on the processing parameters.

In an embodiment, the candidate cells belonging to a same distributed unit (DU) belong to a same group.

In an embodiment, the candidate cells belonging to different DUs belong to different groups.

In an embodiment, the candidate cells include the current serving cell.

In an embodiment, before the step S21, the method further includes: determining or judging whether the processing parameters are to be determined according to the candidate cell grouping information.

In an embodiment, the step S21 includes at least one of the following:
in response to that the candidate cell and the current serving cell belong to a same group, using a first set of processing parameters;
in response to that the candidate cell and the current serving cell do not belong to a same group, using a second set of processing parameters;
in response to that the candidate cell and the current serving cell belong to a same group, skip using a measurement hysteresis, and/or a measurement time to trigger, and/or a filter coefficient;
in response to that the candidate cell and the current serving cell belong to a same group, using a measurement hysteresis, and/or a measurement time to trigger, and/or a filter coefficient of a first preset value;
in response to that the candidate cell and the current serving cell belong to different groups, using the measurement hysteresis, and/or the measurement time to trigger, and/or the filter coefficient; and
in response to that the candidate cell and the current serving cell belong to different groups, using the measurement hysteresis, and/or the measurement time to trigger, and/or the filter coefficient of a second preset value.

In an embodiment, the step S20 includes at least one of the following:
for cell handover in group, skip performing radio link control (RLC) reestablishment and/or medium access control (MAC) reset and/or partial MAC reset;
for cell handover between groups, performing the RLC reestablishment and/or the MAC reset and/or the partial MAC reset; and
determining whether a candidate cell meets a measurement reporting condition based on the processing parameters, and
in response to that the candidate cell meets the measurement reporting condition, sending a layer 1 (L1) measurement report so that a network device performs L1/L2 based inter-cell mobility based on the L1 measurement report and/or issues a command to deactivate or delete the candidate cell.

In an embodiment, the method further includes at least one of the following:
performing L1/L2 based inter-cell handover according to a handover command; and
skip performing L1 measurement on the candidate cells that are deactivated or deleted according to the deactivation or deletion command.

The present application further provides a processing method, which can be applied to a communication device (such as a network device, specifically a base station), including the steps of:
S10: sending candidate cell grouping information so that a terminal performs preset processing based on the candidate cell grouping information.

In an embodiment, the step S10 includes:
sending the candidate cell grouping information so that the terminal determines processing parameters according to the serving cell and the candidate cell grouping information and performs the preset processing based on the processing parameters.

In an embodiment, the method further includes at least one of the following:
the candidate cells belonging to same DU belong to a same group;
the candidate cells belonging to different DUs belong to different groups;
the candidate cells include the current serving cell;
in response to that the candidate cell and the current serving cell belong to a same group, using a first set of processing parameters;
in response to that the candidate cell and the current serving cell do not belong to a same group, using a second set of processing parameters;
in response to that the candidate cell and the current serving cell belong to a same group, skip using a measurement hysteresis, a measurement time to trigger, and a filter coefficient;
in response to that the candidate cell and the current serving cell belong to a same group, using a measurement hysteresis, and/or a measurement time to trigger, and/or a filter coefficient of a first preset value;
in response to that the candidate cell and the current serving cell belong to different groups, using the measurement hysteresis, and/or the measurement time to trigger, and/or the filter coefficient; and
in response to that the candidate cell and the current serving cell belong to different groups, using the measurement hysteresis, and/or the measurement time to trigger, and/or the filter coefficient of a second preset value.

In an embodiment, the method further includes at least one of the following:
issuing a handover command based on a measurement report so that the terminal performs L1/L2 based inter-cell handover; and
issuing a command to deactivate or delete the candidate cell based on the measurement report and/or a neighboring cell relation between the serving cell or the cell to be handed over and the candidate cell or a handover record.

In an embodiment, the measurement report is sent by the terminal after it determines the candidate cell meets the conditions for reporting the measurement report based on the processing parameters.

In an embodiment, the method further includes at least one of the following:
in response to that the measurement report does not include measurement result of a candidate cell, issuing a command to deactivate or delete the candidate cell;
in response to that the measurement result of a candidate cell is lower than a preset threshold, issuing a command to deactivate or delete the candidate cell;
in response to that a candidate cell is not in a neighboring cell list of the current serving cell or the cell to be handed over, issuing a command to deactivate or delete the candidate cell;
in response to that there is no handover record between a candidate cell and the current serving cell or the cell to be handed over, issuing a command to deactivate or delete the candidate cell;
in response to that a deactivated candidate cell is in the neighboring cell list of the current serving cell or the cell to be handed over, issuing a command to activate the candidate cell; and
the deactivation or deletion command or activation command is issued through the handover command.

The present application further provides a processing apparatus, including:
an execution module, configured to perform preset processing based on the candidate cell grouping information.

The present application further provides a processing apparatus, including:
a sending module, configured to send candidate cell grouping information so that a terminal performs preset processing based on the candidate cell grouping information.

The present application further provides a communication device, including: a memory, a processor, and a processing program stored in the memory and executable on the processor, and the processing program implements the steps of any one of the processing methods as described above when executed by the processor. The communication device of the present application may be a terminal device (such as a phone), or a network device (such as a base station). The specific reference needs to be clarified based on the context.

The present application further provides a storage medium, a computer program is stored in the storage medium, and when the computer program is executed by a processor, the steps of any one of the processing methods as described above are implemented.

The embodiment of the present application further provides a computer program product, which includes a computer program code. When the computer program code is executed on a computer, the computer executes the steps of any of the above-mentioned processing methods.

The embodiment of the present application further provides a chip, including a memory and a processor, the memory is used to store a computer program, and the processor is used to call and run the computer program from the memory, so that a device equipped with the chip executes the steps of any of the above-mentioned processing methods.

The technical solution of the present application sends candidate cell grouping information through a network device, and the terminal performs preset processing based on the candidate cell grouping information. There is no need for the terminal to reconfigure the measurement configuration from the current serving cell to other candidate cells each time, which can reduce the impact of ping-pong handover on L1/L2 inter-cell mobility and/or reduce measurement delay and/or signaling overhead.

### BRIEF DESCRIPTION OF THE DRAWINGS

The accompanying drawings, which are incorporated in and constitute a part of this specification, illustrate embodiments consistent with the present application and together with the description, serve to explain the principles of the present application. In order to explain the technical solutions of the embodiments of the present application more clearly, the drawings needed to be used in the description of the embodiments will be briefly introduced below. Obviously, for those skilled in the art, other drawings can be obtained based on these drawings without exerting creative efforts.
FIG. 1 is a schematic diagram of hardware structure of a mobile terminal for implementing various embodiments of the present application.
FIG. 2 is a diagram of architecture of a communication network system according to an embodiment of the present application.
FIG. 3 is a schematic diagram of hardware structure of a controller 140 involved in a processing method according to an embodiment of the present application.
FIG. 4 is a schematic diagram of hardware structure of a network node 150 involved in the processing method according to an embodiment of the present application.
FIG. 5 is a schematic diagram of an interaction process between a terminal and a network device in the processing method according to an embodiment of the present application.
FIG. 6 is a flowchart of the processing method according to a second embodiment of the present application.
FIG. 7 is a schematic diagram of a scenario involved in the processing method according to an embodiment of the present application.

The realization of the purpose, functional features and advantages of the present application will be further described with reference to the embodiments and the accompanying drawings. Through the above-mentioned drawings, clear embodiments of the present application have been shown, which will be described in more detail below. These drawings and text descriptions are not intended to limit the scope of the present application's concepts in any way, but are intended to illustrate the present application's concepts for those skilled in the art with reference to specific embodiments.

### DETAILED DESCRIPTION OF THE EMBODIMENTS

Exemplary embodiments will be described in detail herein, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatus and methods consistent with aspects of the present application as detailed in the appended claims.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element. In addition, components, features, and elements with the same name in different embodiments of the present application may have the same or different meanings. Its specific meaning needs to be determined according to its explanation in the specific embodiment or further combined with the context in the specific embodiment.

It should be understood that although the terms first, second, third, etc. may be used herein to describe various information, the information should not be limited to these terms. These terms are only used to distinguish information of the same type from one another. For example, without departing from the scope of this document, first information may also be called second information, and similarly, second information may also be called first information. Depending on the context, the word "if" as used herein may be interpreted as "at" or "when" or "in response to a determination". Furthermore, as used herein, the singular forms "a", "an" and "the" are intended to include the plural forms as well, unless the context indicates otherwise. It should be further understood that the terms "comprising", "including" indicate the existence of features, steps, operations, elements, components, items, species, and/or groups, but does not exclude the existence, occurrence or addition of one or more other features, steps, operations, elements, components, items, species, and/or groups. The terms "or", "and/or", "comprising at least one of" and the like used in the present application may be interpreted as inclusive, or mean any one or any combination. For example, "comprising at least one of: A, B, C" means "any of: A; B; C; A and B; A and C; B and C; A and B and C". As another example, "A, B, or C" or "A, B, and/or C" means "any of the following: A; B; C; A and B; A and C; B and C; A and B and C". Exceptions to this definition will only arise when combinations of elements, functions, steps or operations are inherently mutually exclusive in some way.

It should be understood that although the various steps in the flowchart in the embodiment of the present application are displayed sequentially as indicated by the arrows, these steps are not necessarily executed sequentially in the order indicated by the arrows. Unless otherwise specified herein, there is no strict order restriction on the execution of these steps, and they can be executed in other orders. Moreover, at least some of the steps in the figure may include multiple sub-steps or multiple stages, these sub-steps or stages are not necessarily executed at the same time, but can be executed at different times. The execution sequence thereof is not necessarily performed sequentially, but may be performed alternately or alternately with at least one part of other steps or sub-steps or stages of other steps.

Depending on the context, the words "if" as used herein may be interpreted as "at" or "when" or "in response to determining" or "in response to detecting". Similarly, depending on the context, the phrases "if determined" or "if detected (the stated condition or event)" could be interpreted as "when determined" or "in response to the determination" or "when detected (the stated condition or event)" or "in response to detection (the stated condition or event)".

It should be noted that in this article, step codes such as S10 and S20 are used for the purpose of expressing the corresponding content more clearly and concisely, and do not constitute a substantive limitation on the order. Those skilled in the art may perform S20 first and then S10 etc. during specific implementation, but these should all be within the protection scope of the present application.

It should be understood that the specific embodiments described here are only used to explain the present application, and are not intended to limit the present application.

In the following description, the use of suffixes such as "module", "part" or "unit" for denoting elements is only for facilitating the description of the present application and has no specific meaning by itself. Therefore, "module", "part" or "unit" may be used in combination.

In an embodiment, the terminal device can be implemented in various forms. For example, the terminal device described in the present application can include a mobile phone, a tablet computer, a notepad computer, a hand-held computer, a personal digital assistant (PDA), a portable media player (PMP), a navigation device, a wearable device, a smart bracelet, a pedometer and other terminal devices, as well as a fixed terminal device such as a digital TV and a desktop computer.

The present application takes a mobile terminal as an example to illustrate. Those skilled in the art will understand that, in addition to elements specifically used for mobile purposes, the configuration according to the embodiments of the present application can also be applied to the fixed terminal device.

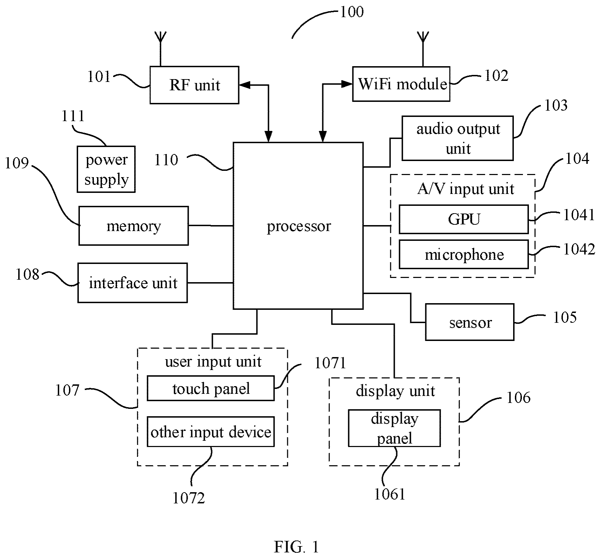

As shown in FIG. 1, FIG. 1 is a schematic structural diagram of a hardware of a mobile terminal that implements various embodiments of the present application. The mobile terminal 100 can include a Radio Frequency (RF) unit 101, a Wi-Fi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the mobile terminal shown in FIG. 1 does not constitute a limitation on the mobile terminal. The mobile terminal can include more or fewer components, or a combination of some components, or differently arranged components than shown in the figure.

Hereinafter, each component of the mobile terminal will be specifically introduced with reference to FIG. 1.

The radio frequency unit 101 can be used for transmitting and receiving signals during the process of transceiving information or talking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices through wireless communication. The above-mentioned wireless communication can use any communication standard or protocol, including but not limited to Global System of Mobile communication (GSM), General Packet Radio Service (GPRS), Code Division Multiple Access 2000 (CDMA2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE), and 5G, or the like.

Wi-Fi is a short-range wireless transmission technology. The mobile terminal can help users transmit and receive email, browse webpage, and access streaming media through the Wi-Fi module 102, and Wi-Fi provides users with wireless broadband Internet access. Although FIG. 1 shows the Wi-Fi module 102, it is understandable that it is not a necessary component of the mobile terminal and can be omitted as needed without changing the essence of the present application.

When the mobile terminal 100 is in a call signal receiving mode, a call mode, a recording mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can further provide audio output related to a specific function performed by the mobile terminal 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture mode or an image capture mode. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation modes such as a call mode, a recording mode, a voice recognition mode, and the like, and can process such sound into audio data. The processed audio (voice) data can be converted into a format that can be sent to a mobile communication base station via the radio frequency unit 101 in the case of a call mode for output. The microphone 1042 can implement various types of noise cancellation (or suppression) algorithms to eliminate (or suppress) noise or interference generated during the process of transceiving audio signals.

The mobile terminal 100 also includes at least one sensor 105, such as a light sensor, a motion sensor, and other sensors. Specifically, the light sensor includes an ambient light sensor and a proximity sensor. The ambient light sensor can adjust the brightness of the display panel 1061 according to the brightness of the ambient light. The proximity sensor can turn off the display panel 1061 and/or the backlight when the mobile terminal 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the mobile terminal (such as horizontal and vertical screen switching, related games, magnetometer attitude calibration), vibration recognition related functions (such as pedometer, tap), or the like. The mobile terminal can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated here.

The display unit 106 is configured to display information input by the user or information provided to the user. The display unit 106 can include a display panel 1061, and the display panel 1061 can be configured in the form of a liquid crystal display (LCD), an organic light emitting diode (OLED), or the like.

The user input unit 107 can be configured to receive inputted numeric or character information, and generate key signal input related to user settings and function control of the mobile terminal. Specifically, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch position, detects the signal brought by the touch operation, and transmits the signal to the touch controller. The touch controller receives the touch information from the touch detection device, converts the touch information into contact coordinates, and sends it to the processor 110, and can receive and execute the instructions sent by the processor 110. In addition, the touch panel 1071 can be implemented in multiple types such as resistive, capacitive, infrared, and surface acoustic wave. In addition to the touch panel 1071, the user input unit 107 can also include other input devices 1072. Specifically, the other input devices 1072 can include, but are not limited to, one or more of physical keyboard, function keys (such as volume control buttons, switch buttons, etc.), trackball, mouse, joystick, etc., which are not specifically limited here.

Further, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in FIG. 1, the touch panel 1071 and the display panel 1061 are used as two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface through which at least one external device can be connected to the mobile terminal 100. For example, the external device can include a wired or wireless earphone port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the mobile terminal 100 or can be configured to transfer data between the mobile terminal 100 and the external device.

The memory 109 can be configured to store software programs and various data. The memory 109 can mainly include a program storage area and a data storage area. The program storage area can store the operating system, at least one application required by the function (such as sound play function, image play function, etc.), or the like. The data storage area can store data (such as audio data, phone book, etc.) created based on the use of the mobile phone. In addition, the memory 109 can include a high-speed random access memory, and can also include a non-volatile memory, such as at least one magnetic disk storage device, a flash memory device, or other volatile solid-state storage devices.

The processor 110 is a control center of the mobile terminal, and uses various interfaces and lines to connect the various parts of the entire mobile terminal. By running or performing the software programs and/or modules stored in the memory 109, and calling the data stored in the memory 109, various functions and processing data of the mobile terminal are executed, thereby overall monitoring of the mobile terminal is performed. The processor 110 can include one or more processing units; and the processor 110 may integrate an application processor and a modem processor. The application processor mainly processes an operating system, a user interface, an application, or the like, and the modem processor mainly processes wireless communication. It can be understood that the foregoing modem processor may not be integrated into the processor 110.

The mobile terminal 100 can also include a power source 111 (such as a battery) for supplying power to various components. The power supply 111 can be logically connected to the processor 110 through a power management system, so that functions such as charging, discharging, and power consumption management can be managed through the power management system.

Although not shown in FIG. 1, the mobile terminal 100 can also include a Bluetooth module, or the like, which will not be repeated herein.

In order to facilitate the understanding of the embodiments of the present application, the following describes the communication network system on which the mobile terminal of the present application is based.

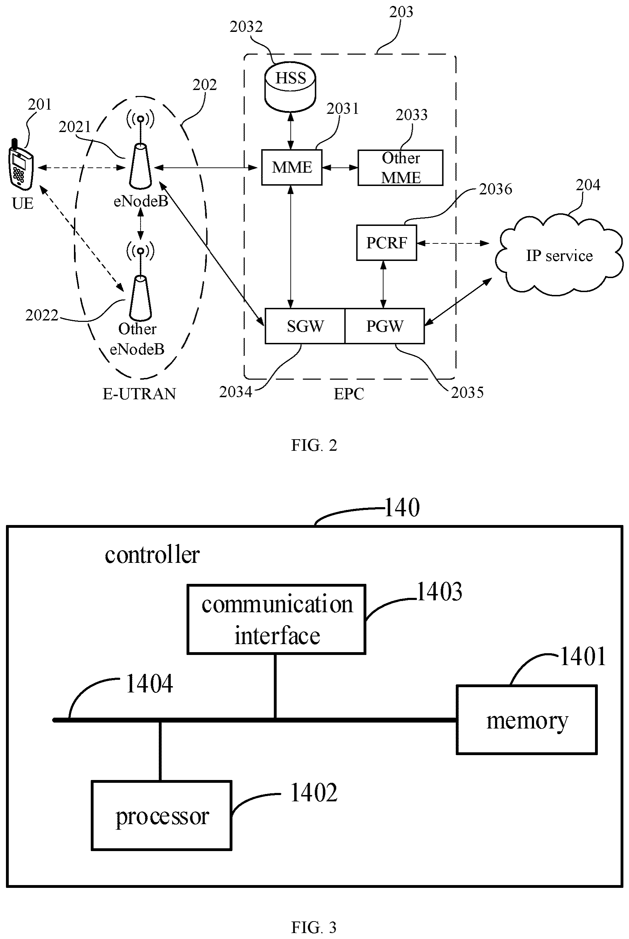

As shown in FIG. 2, FIG. 2 is an architecture diagram of a communication network system according to an embodiment of the present application. The communication network system is an LTE system of general mobile communication network technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

In an embodiment, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 through a backhaul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service features, data rates, and so on. All user data can be sent through SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include Internet, intranet, IP Multimedia Subsystem (IMS), or other IP services.

Although the LTE system is described above as an example, those skilled in the art should know that, the present application is not only applicable to the LTE system, but also applicable to other wireless communication systems, such as GSM, CDMA2000, WCDMA, TD-SCDMA, 5G and new network systems in the future (such as 6G), or the like, which is not limited herein.

Based on the above hardware structure of the mobile terminal and communication network system, various embodiments of the present application are provided.

FIG. 3 is a schematic diagram of the hardware structure of a controller 140 provided in the present application. The controller 140 includes: a memory 1401 and a processor 1402, the memory 1401 is used to store program instructions, and the processor 1402 is used to call the program instructions in the memory 1401 to execute the steps performed by the controller in the first embodiment of the above method, and its implementation principle and beneficial effects are similar, which will not be repeated here.

In an embodiment, the controller further includes a communication interface 1403, which can be connected to the processor 1402 via a bus 1404. The processor 1402 can control the communication interface 1403 to implement the receiving and sending functions of the controller 140.

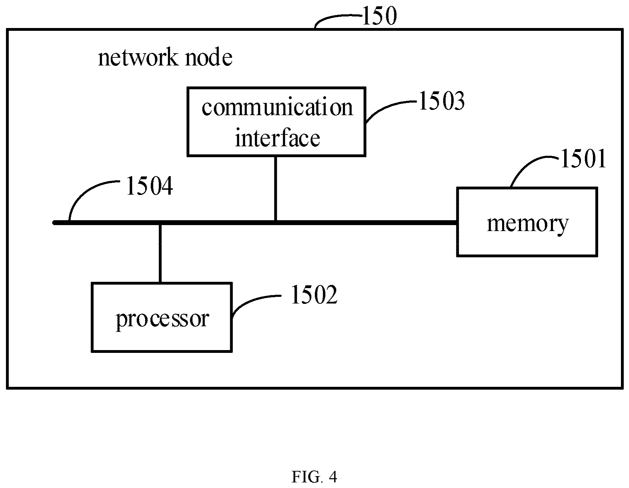

FIG. 4 is a schematic diagram of the hardware structure of a network node 150 provided by the present application. The network node 150 includes: a memory 1501 and a processor 1502, the memory 1501 is used to store program instructions, and the processor 1502 is used to call the program instructions in the memory 1501 to execute the steps performed by the first node in the first embodiment of the above method, and its implementation principle and beneficial effects are similar, which will not be repeated here.

In an embodiment, the controller further includes a communication interface 1503, which can be connected to the processor 1502 via a bus 1504. The processor 1502 can control the communication interface 1503 to implement the receiving and sending functions of the network node 150.

The above-mentioned integrated module implemented in the form of a software function module can be stored in a computer-readable storage medium. The above-mentioned software function module is stored in a storage medium, including a plurality of instructions for enabling a computer device (which can be a personal computer, a server, or a network device, etc.) or a processor to perform some steps of the methods of various embodiments of the present application.

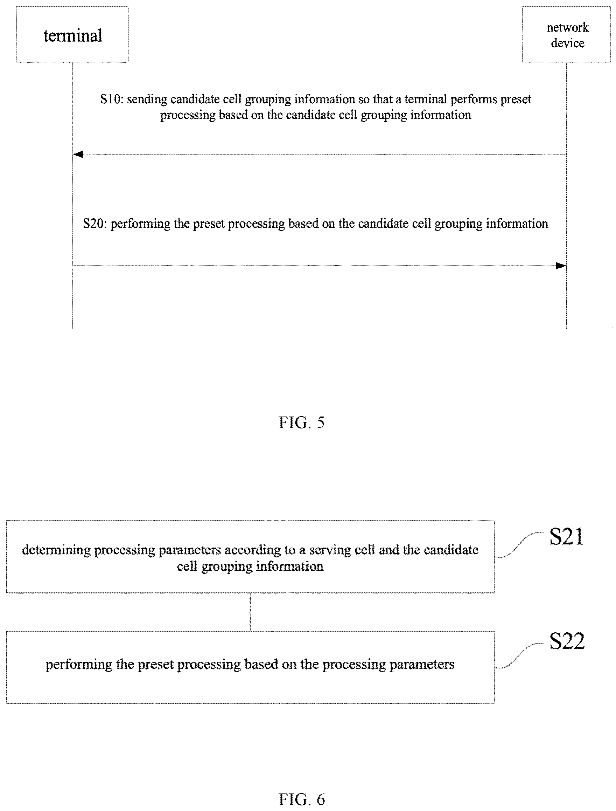

As shown in FIG. 5, the first embodiment of the present application provides a processing method, including the steps of:
S10: sending, by the network device, candidate cell grouping information, so that the terminal performs preset processing based on candidate cell grouping information;
S20: performing, by the terminal, the preset processing based on the candidate cell grouping information.

The processing method of the embodiment of the present application can be applied to a terminal (such as a mobile phone), and can also be applied to a network device (such as a base station).

This embodiment takes into account that, assuming that layer 1 (L1) measurement/reporting is used to trigger L1/ layer 2 (L2) inter-cell mobility to reduce measurement delay, frequent ping-pong handover may occur due to unstable L1 measurement. In order to reduce ping-pong handover, measurement hysteresis (Hysteresis, a parameter used in the entering and leaving conditions of event triggered reporting conditions), measurement time to trigger (TimeToTrigger, the time that the specific criteria of the event need to be met in order to trigger the measurement report), and filter coefficient (filterCoefficient, measurement filter coefficient) may be introduced for L1 measurement and reporting, but the introduction of Hysteresis, TimeToTrigger, and filterCoefficient may also cause measurement delay. Therefore, it is necessary to reduce the impact of ping-pong handover and/or measurement delay. In addition, it is also necessary to consider that ping-pong handover has different effects on L1/L2 inter-cell mobility in different scenarios (inter-DU/intra-DU).

In an embodiment, for the L1/L2-triggered Mobility (LTM) continuous mobility scenario, that is, after the terminal performs L1/L2 inter-cell mobility, the previous candidate cell configuration is retained and the LTM is continued.

The solution of the embodiment of the present application can solve the problem of the impact of ping-pong handover caused by using L1 measurement/reporting to trigger LTM, reduce the impact of ping-pong handover on L1/L2 inter-cell mobility, and/or reduce measurement delay and/or signaling overhead.

In this embodiment, the candidate cell grouping information is sent through a network device, so that the terminal performs a preset processing based on the candidate cell grouping information.

In an embodiment, the candidate cell grouping information means that the candidate cells belonging to the same distributed unit (DU) are in the same group and/ or the candidate cells belonging to different DUs are in different groups. For example, the network device can assign a group ID to each candidate cell, the candidate cells belonging to the same DU are assigned a same group ID, and/or the candidate cells belonging to different DUs are assigned a different group ID.

In an embodiment, the candidate cell grouping information is sent by a network device, and the terminal receives the candidate cell grouping information sent by the network device and performs preset processing based on the candidate cell grouping information.

In an embodiment, the preset processing includes: performing L1/L2-based inter-cell mobility.

In an embodiment, executing L1/L2-based inter-cell mobility may include: the terminal executing L1/L2-based inter-cell mobility measurement, measurement reporting, the network device sending a handover command according to the measurement report and /or the terminal performing inter-cell handover after receiving the handover command and executing RLC reestablishment, MAC reset, etc.

Compared with the related art, in the technical solution of the present application, candidate cell grouping information is sent by a network device, and the terminal performs preset processing based on the candidate cell grouping information. There is no need for the terminal to reconfigure the measurement configuration from the current serving cell to other candidate cells each time, which can reduce the impact of ping-pong handover on L1/L2 inter-cell mobility, and/or reduce measurement delay and/or signaling overhead.

As shown in FIG. 6, the second embodiment of the present application provides a processing method, based on the embodiment shown in FIG. 5 above, step S20, including the steps of:
S21: determining processing parameters according to the serving cell and the candidate cell grouping information; and
S22: performing the preset processing based on the processing parameters.

In an embodiment, in a scenario where the terminal performs L1/L2-based inter-cell mobility based on candidate cell grouping information, the processing parameters include measurement parameters.

In an embodiment, step S20 may include the following steps:
determining, by the terminal, the measurement parameters according to the serving cell and the candidate cell grouping information;
performing, by the terminal, L1/L2-based inter-cell mobility measurement and reporting based on the measurement parameters.

In an embodiment, the measurement parameter includes at least one of the following:
measurement hysteresis;
measurement time to trigger; and
filter Coefficient.

In an embodiment, before the step S21, the method further includes: determining or judging, by the terminal, whether processing parameters are to be determined according to the candidate cell grouping information.

In an embodiment, the terminal determines or judges whether the measurement parameters are to be determined according to the candidate cell grouping information.

In an embodiment, considering that ping-pong handover has different effects on L1/L2 inter-cell mobility in different scenarios (inter-DU/intra-DU), this embodiment performs corresponding grouping according to whether the candidate cells belong to the same DU, with the aim of reducing mobility delay and reducing measurement delay while reducing ping-pong handover.

In an embodiment, the present application further includes at least one of the following:
the candidate cells belonging to same distributed unit (DU) belong to a same group;
the candidate cells belonging to different DUs belong to different groups; and
the candidate cells includes the current serving cell.

In an embodiment, the network device may assign a group ID to each candidate cell, candidate cells belonging to the same DU are assigned a same group ID, and/or candidate cells belonging to different DUs are assigned a different group ID.

In an embodiment, the step S21 includes at least one of the following:
in response to that the candidate cell and the current serving cell belong to a same group, using a first set of processing parameters;
in response to that the candidate cell and the current serving cell do not belong to a same group, using a second set of processing parameters;
in response to that the candidate cell and the current serving cell belong to a same group, skip using a measurement hysteresis, and/or a measurement time to trigger, and/or a filter coefficient;
in response to that the candidate cell and the current serving cell belong to a same group, using a measurement hysteresis, and/or a measurement time to trigger, and/or a filter coefficient of a first preset value;
in response to that the candidate cell and the current serving cell belong to different groups, using the measurement hysteresis, and/or the measurement time to trigger, and/or the filter coefficient; and
in response to that the candidate cell and the current serving cell belong to different groups, using the measurement hysteresis, and/or the measurement time to trigger, and/or the filter coefficient of a second preset value.

In an embodiment, the second preset value is greater than the first preset value.

In an embodiment, for the intra-DU scenario, since the serving cell and the candidate cell share the same Service Data Adaptation Protocol (SDAP)/ Packet Data Convergence Protocol (PDCP)/ Radio Link Control (RLC)/ Medium Access Control (MAC) configuration, the ping-pong handover has little impact on the intra-DU scenario. Therefore, it is possible to either not apply or apply smaller values of Hysteresis, TimeToTrigger, and filterCoefficient.

In an embodiment, for the intra-CU inter-DU scenario, since the RLC/MAC of the serving cell and the candidate cell are located in different DUs, RLC reestablishment and MAC reset are required during handover, so ping-pong handover has a great impact on the intra-DU scenario. In order to reduce ping-pong handover, it is possible to either apply or apply greater values of Hysteresis, TimeToTrigger, and filterCoefficient.

In an embodiment, since the UE does not know whether the candidate cell and the serving cell belong to a same DU or not, the network can group the candidate cells according to their DUs when configuring the candidate cells. When the cells belonging to the same DU group perform L1 measurement and reporting, it is possible to either not apply or apply smaller values of Hysteresis, TimeToTrigger, and filterCoefficient. When the cells belonging to different DU groups perform L1 measurement and reporting, it is possible to either apply or apply greater values of Hysteresis, TimeToTrigger, and filterCoefficient.

In an embodiment, the step S20 further includes at least one of the following:
for cell handover in group, skip performing radio link control (RLC) reestablishment and/or medium access control (MAC) reset and/or partial MAC reset;
for cell handover between groups, performing the RLC reestablishment and/or the MAC reset and/or the partial MAC reset.

Third embodiment of the present application further provides a processing method, based on the above corresponding embodiment, in an implementation manner of this embodiment, the terminal performs L1/L2-based inter-cell mobility based on the measurement parameter, including:

The terminal determines whether the candidate cell meets the measurement report reporting conditions based on the measurement parameters; if it is determined that the candidate cell meets the measurement report reporting conditions, the terminal sends an L1 measurement report to the network device, so that the network device can perform L1/L2-based inter-cell mobility according to the measurement report, and/or, so that the network device can issue a command to deactivate or delete candidate cell.

In an embodiment, performing, by the network device, L1/L2-based inter-cell mobility according to the measurement report includes:
issuing, by the network device, a handover command according to the measurement report reported by the terminal, and performing L1/L2-based inter-cell mobility, so that the terminal performs L1/L2-based inter-cell handover after receiving the handover command.

In an embodiment, the measurement report includes measurement results of other candidate cells other than the candidate cells that meet the measurement report reporting conditions.

In an embodiment, the terminal receives a handover command sent by a network device, and performs L1/L2-based inter-cell handover according to the handover command.

In an embodiment, at least one of the following is also included:
issuing, by the network device, a command to deactivate or delete candidate cell based on the measurement report and/or the neighboring relationship between the serving cell or the cell to be handed over and the candidate cell or the handover record. In an embodiment, the measurement report is sent by the terminal after determining that the candidate cell meets the measurement report reporting conditions based on the processing parameters.

The terminal receives a deactivation or deletion command sent by a network device, and does not perform L1 measurement on the deactivated or deleted candidate cell according to the deactivation or deletion command.

In an embodiment, at least one of the following is also included:
in response to that the measurement report does not include a measurement result of a candidate cell, issuing, by the network device, a command to deactivate or delete the candidate cell;
in response to that the measurement result of a candidate cell is lower than a preset threshold, issuing, by the network device, a command to deactivate or delete the candidate cell;
in response to that a candidate cell is not in a neighboring cell list of the current serving cell or the cell to be handed over, issuing, by the network device, a command to deactivate or delete the candidate cell;
in response to that there is no handover record between the candidate cell and the current serving cell or the cell to be handed over, issuing, by the network device, a command to deactivate or delete the candidate cell; and
in response to that the deactivated candidate cell is in the neighboring cell list of the current serving cell or the cell to be handed over, issuing, by the network device, a command to activate the candidate cell.

In an embodiment, the deactivation or deletion command or activation command is issued through the handover command.

In an embodiment, based on the terminal measurement results or the neighboring relationship between the candidate cell and the current serving cell or the cell to be handed over, the network device dynamically adjusts the activation status of the candidate cell or the network releases some candidate cells. The terminal only performs L1 measurement on the candidate cells in the activated state or in the candidate cell list.

In the technical solution of the embodiment of the present application, candidate cell grouping information is sent by a network device, and the terminal performs L1/L2-based inter-cell mobility based on the candidate cell grouping information. There is no need for the terminal to reconfigure the measurement configuration from the current serving cell to other candidate cells each time, which can reduce the impact of ping-pong handover on L1/L2 inter-cell mobility and/or reduce measurement delay and/or signaling overhead.

In an implementation of this embodiment, the specific process is as follows:
1. The source cell/source gNB/CU to which the source cell belongs configures the UE measurement process, and the UE reports the measurement report according to the measurement configuration.
2. The source cell/source gNB/CU to which the source cell belongs decides to perform L1/L2 inter-cell mobility.

The source cell/source gNB/CU to which the source cell belongs prepares one or more L1/L2 inter-cell mobility candidate cell configurations according to the measurement report, and groups them according to the DUs to which the serving cell and the candidate cells belong, and the cells belong to the same DU are grouped together.
3. The source cell /source gNB/ CU to which the source cell belongs sends the L1/L2 inter-cell mobility candidate cell configuration and grouping information to the UE through the RRCReconfiguration message;
4. The UE performs L1 measurement and either not apply or apply smaller values of Hysteresis and/or TimeToTrigger and/or filterCoefficient for candidate cells belonging to the same DU as the current serving cell. It either apply or apply greater values of Hysteresis and/or TimeToTrigger and/or filterCoefficient for candidate cells belonging to different DUs from the current serving cell.
5. When the L1 measurement reporting conditions are met, the L1 measurement reporting is triggered, and the network device issues MAC CE to trigger LTM. For LTM cell handover in group, the UE does not perform RLC reestablishment and/or MAC reset and/or partial MAC reset; and/or, for cell handover between groups, the UE performs RLC reestablishment and/or MAC reset and/or partial MAC reset.
6. The network equipment dynamically adjusts the activation/deletion status of candidate cells (can be issued together through L1/L2 cell switch cmd). The UE only performs L1 measurement on candidate cells in the activated state/candidate cell list.

For example, the state of the candidate cell is dynamically adjusted according to the UE measurement result and/or the geographical location or neighboring cell relationship between the candidate cell and the current serving cell.

In an embodiment, if the UE L1 measurement result does not include measurement results of certain candidate cells (meaning that the signals of these candidate cells do not meet the measurement reporting condition or the UE cannot measure the signal of these candidate cells) or the measurement result is lower than a specific threshold, the network device deactivates/deletes these candidate cells.

In an embodiment, if some candidate cells are not in the neighboring cell list of the current serving cell or the cell to be handed over or have no historical handover records, the network device deactivates/deletes these candidate cells.

For the deactivation scenario, if the deactivated cells are in the neighboring cell list of the serving cell/cell to be handed over after LTM, the network device activates these cells.

For the deletion scenario, the initial candidate information preparation process (i.e., steps 1 to 3) is used to add these cells to the candidate cell list.

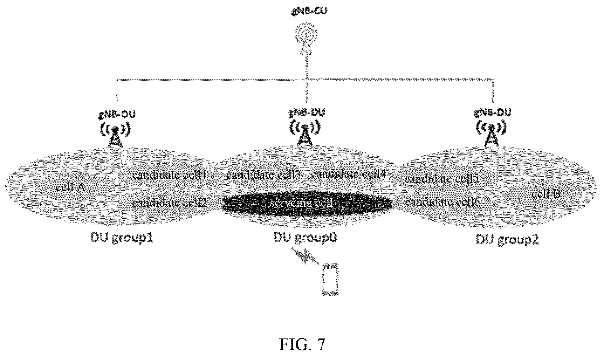

The solution of the present application is described in detail below in conjunction with FIG. 7, and the specific process is as follows.

As shown in FIG. 7, the current serving cell is cell0, that is, the source cell is cell0. Cell0 configures the UE measurement process, and the UE reports the measurement report according to the measurement configuration. The measurement report includes cell1, cell2, cell3, cell4, cell5, and cell6.

The source cell prepares the candidate cell configurations of cell1, cell2, cell3, cell4, cell5, and cell6 for L1/L2 inter-cell mobility according to the measurement report, and groups the candidate cells according to the DUs to which they belong. Cells belonging to the same DU are grouped together. The current serving cell cell0 belongs to DU group0 by default. Cell1 and cell2 belong to DU group1, cell3 and cell4 belong to DU group0, and cell5 and cell6 belong to DU group2.

The source cell sends the L1/L2 inter-cell mobility candidate cell configuration and grouping information to the UE through the RRCReconfiguration message.

The UE performs L1 measurement and either not apply or apply smaller values of a Hysteresis and/or TimeToTrigger and/or filterCoefficient for candidate cells (such as cell3 and cell4) belonging to the same DU as the current serving cell. It is possible to either apply or apply greater values of the Hysteresis and/or TimeToTrigger and/or filterCoefficient for candidate cells (cell5 and cell6) belonging to different DUs from the current serving cell.

When a cell (such as cell2) meets the L1 measurement reporting conditions, the UE reports the L1 measurement report, the network performs L1/L2 inter-cell mobility, sends L1/L2 cell switch signaling, and the UE performs L1/L2 inter-cell mobility handover to cell2. For LTM cell handover in group, the UE does not perform RLC reestablishment and/or (partial) MAC reset; and/or, for cell handover between groups, the UE performs RLC reestablishment and/or (partial) MAC reset, and some or all candidate cell configurations and grouping information are retained after handover.

Cell2 determines that cell5 and cell6 are not in the current neighboring cell list or have no historical handover records, and issues a command to deactivate/delete candidate cells of cell5 and cell6 (which can be issued together with the L1/L2 cell switch or after the switch). The UE does not perform L1 measurement on cell5 and cell6.

The UE performs L1 measurement and does not apply/apply a smaller Hysteresis and/or TimeToTrigger and/or filterCoefficient for candidate cells (such as cell1) belonging to the same DU as the current serving cell. It is possible to either apply or apply greater values of Hysteresis and/or TimeToTrigger and/or filterCoefficient for candidate cells (cell3, cell4) belonging to a different DU from the current serving cell.

In the technical solution of the embodiment of the present application, candidate cell grouping information is sent by a network device, and the terminal performs L1/L2-based inter-cell mobility based on the candidate cell grouping information. There is no need for the terminal to reconfigure the measurement configuration from the current serving cell to other candidate cells each time, which can reduce the impact of ping-pong handover on L1/L2 inter-cell mobility and/or reduce measurement delay and/or signaling overhead.

The present application further provides a processing apparatus, including:
The execution module is used to execute preset processing based on the candidate cell grouping information.

In an embodiment, the execution module is further used to determine processing parameters according to the serving cell and candidate cell grouping information; and perform preset processing based on the processing parameters.

In an embodiment, at least one of the following is also included:
the candidate cells belonging to the same DU belong to a same group;
the candidate cells belonging to different DUs belong to different groups;
the candidate cells includes the current serving cell.

In an embodiment, the method further includes: determining or judging whether the processing parameters are to be determined according to the candidate cell grouping information.

In an embodiment, at least one of the following is included:
in response to that the candidate cell and the current serving cell belong to a same group, using a first set of processing parameters;
in response to that the candidate cell and the current serving cell do not belong to a same group, using a second set of processing parameters;
in response to that the candidate cell and the current serving cell belong to a same group, skip using a measurement hysteresis, a measurement time to trigger, and a filter coefficient;
in response to that the candidate cell and the current serving cell belong to a same group, using a measurement hysteresis, and/or a measurement time to trigger, and/or a filter coefficient of a first preset value;
in response to that the candidate cell and the current serving cell belong to different groups, using the measurement hysteresis, and/or the measurement time to trigger, and/or the filter coefficient; and
in response to that the candidate cell and the current serving cell belong to different groups, using the measurement hysteresis, and/or the measurement time to trigger, and/or the filter coefficient of a second preset value.

In an embodiment, at least one of the following is included:
for cell handover in group, skip performing radio link control (RLC) reestablishment and/or medium access control (MAC) reset and/or partial MAC reset;
for cell handover between groups, performing the RLC reestablishment and/or the MAC reset and/or the partial MAC reset; and
determining whether a candidate cell meets a measurement reporting condition based on the processing parameters, and
in response to that a candidate cell meets the measurement reporting condition, sending a layer 1 (L1) measurement report so that a network device performs inter-cell mobility based on the L1 measurement report and/or issues a command to deactivate or delete the candidate cell.

In an embodiment, at least one of the following is also included:
performing L1 or layer 2 (L2) based inter-cell handover according to a handover command; and
skip performing L1 measurement on the candidate cell in response to that the candidate cell is deactivated or deleted according to a deactivation or deletion command.

The present application further provides a processing apparatus, including:
a sending module, which is used to send the candidate cell grouping information so that a terminal performs preset processing based on the candidate cell grouping information.

In an embodiment, the sending module is further used to send the candidate cell grouping information so that the terminal determines processing parameters according to the serving cell and the candidate cell grouping information and performs the preset processing based on the processing parameters.

In an embodiment, at least one of the following is also included:
the candidate cells belonging to the same DU belong to a same group;
the candidate cells belonging to different DUs belong to different groups;
the candidate cells includes the current serving cell;
in response to that the candidate cell and the current serving cell belong to a same group, using a first set of processing parameters;
in response to that the candidate cell and the current serving cell do not belong to a same group, using a second set of processing parameters;
in response to that the candidate cell and the current serving cell belong to a same group, skip using a measurement hysteresis, a measurement time to trigger, and a filter coefficient;
in response to that the candidate cell and the current serving cell belong to a same group, using a measurement hysteresis, and/or a measurement time to trigger, and/or a filter coefficient of a first preset value;
in response to that the candidate cell and the current serving cell belong to different groups, using the measurement hysteresis, and/or the measurement time to trigger, and/or the filter coefficient; and
in response to that the candidate cell and the current serving cell belong to different groups, using the measurement hysteresis, and/or the measurement time to trigger, and/or the filter coefficient of a second preset value.

In an embodiment, at least one of the following is also included:
issuing a handover command based on a measurement report so that the terminal performs L1 or L2 based inter-cell handover; and
based on the measurement report and/or a neighboring cell relation between the serving cell or the cell to be handed over and the candidate cell or a handover record, issuing a command to deactivate or delete the candidate cell.

In an embodiment, at least one of the following is also included:
in response to that the measurement report does not include a measurement result of a candidate cell, issuing a command to deactivate or delete the candidate cell;
in response to that the measurement result of a candidate cell is lower than a preset threshold, issuing a command to deactivate or delete the candidate cell;
in response to that a candidate cell is not in a neighboring cell list of the current serving cell or the cell to be handed over, issuing a command to deactivate or delete the candidate cell;
in response to that there is no handover record between a candidate cell and the current serving cell or the cell to be handed over, issuing a command to deactivate or delete the candidate cell; and
in response to that a deactivated candidate cell is in the neighboring cell list of the current serving cell or the cell to be handed over, issuing a command to activate the candidate cell; where a deactivation or deletion command or activation command is issued through a handover command.

The embodiment of the present application further provides a communication device, including: a memory, a processor, and a processing program stored in the memory and executable on the processor, where the processing program is executed by the processor to implement the processing method described in any of the above embodiments. The communication device mentioned in the present application may be a terminal (such as a mobile phone) or a network device (such as a base station), and the specific reference needs to be clarified in combination with the context.

An embodiment of the present application further provides a storage medium, on which a computer program is stored. When the computer program is executed by a processor, the processing method described in any of the above embodiments is implemented.

In the embodiments of the communication device and the storage medium provided in the present application, all the technical features of any of the above-mentioned processing method embodiments may be included, and the expansion and explanation content of the specification are basically the same as those of the embodiments of the above-mentioned methods, and will not be repeated here.

The embodiment of the present application further provides a computer program product, which includes a computer program code. When the computer program code runs on a computer, the computer executes the methods in the above various possible implementation modes.

The embodiment of the present application further provides a chip, including a memory and a processor, the memory is used to store a computer program, and the processor is used to call and run the computer program from the memory, so that a device equipped with the chip executes the methods in various possible implementation modes as described above.

It is understood that the above scenarios are only examples and do not constitute a limitation on the application scenarios of the technical solutions provided in the embodiments of the present application. The technical solutions of the present application can also be applied to other scenarios. For example, it is known to those skilled in the art that with the evolution of the system architecture and the emergence of new business scenarios, the technical solutions provided in the embodiments of the present application are also applicable to similar technical problems.

The serial numbers of the above-mentioned embodiments of the present application are for description only and do not represent the advantages or disadvantages of the embodiments.

The method of the embodiment of the present application can be adjusted in order, combined and deleted according to actual needs.

The units in the device of the embodiment of the present application can be merged, divided and deleted according to actual needs.

In the present application, the same or similar terminology concepts, technical solutions and/or application scenario descriptions are generally described in detail only the first time they appear. When they appear again later, they are generally not repeated for the sake of brevity. When understanding the technical solutions and other contents of the present application, for the same or similar terminology concepts, technical solutions and/or application scenario descriptions that are not described in detail later, reference can be made to the previous related detailed descriptions.

In this application, the description of each embodiment has its own emphasis. For the part that is not described or recorded in detail in a certain embodiment, please refer to the relevant description of other embodiments. The various technical features of the technical solution of this application can be combined arbitrarily. In order to make the description concise, all possible combinations of the various technical features in the above embodiments are not described. However, as long as there is no contradiction in the combination of these technical features, they should be considered to be within the scope of the present application.

Through the description of the above implementation methods, those skilled in the art can clearly understand that the above-mentioned embodiment methods can be implemented by means of software plus a necessary general hardware platform, and of course by hardware, but in many cases the former is a better implementation method. Based on such an understanding, the technical solution of the present application, or the part that contributes to the prior art, can be embodied in the form of a software product, which is stored in a storage medium (such as ROM/RAM, magnetic disk, optical disk) as above, and includes a number of instructions for a terminal device (which can be a mobile phone, a computer, a server, a controlled terminal, or a network device, etc.) to execute the method of each embodiment of the present application.

In the above embodiments, it can be implemented in whole or in part by software, hardware, firmware, or any combination thereof. When implemented using software, it may be implemented in whole or in part in the form of a computer program product. The computer program product includes one or more computer instructions. When computer program instructions are loaded and executed on a computer, processes or functions according to embodiments of the present application are generated in whole or in part. The computer may be a general purpose computer, a special purpose computer, a computer network, or other programmable device. The computer instruction may be stored in or transmitted from one computer-readable storage medium to another computer-readable storage medium. For example, the computer instruction may be transmitted by wired (e.g., coaxial cable, optical fiber, digital subscriber line) or wireless (e.g., infrared, wireless, microwave, etc.) means from one website, computer, server, or data center to another website, computer, server, or data center. Computer-readable storage media can be any available media that can be accessed by a computer or a data storage device such as a server, data center, or other integrated media that contains one or more available media. Available media may be magnetic media (e.g., floppy disk, storage disk, tape), optical media (e.g., DVD), or semiconductor media (e.g., Solid State Disk (SSD)), etc.

The above are only some embodiments of the present application, and are not intended to limit the scope of the present application. Any equivalent structure or equivalent process transformation made using the contents of the specification and drawings of the present application, or directly or indirectly applied in other related technical fields, shall be similarly included in the scope of the present application.

## Claims

1. A processing method, **characterized by** comprising:
S20: performing preset processing based on candidate cell grouping information.

2. The method according to claim 1, wherein the step S20 comprises:
S21: determining processing parameters according to the serving cell and the candidate cell grouping information; and
S22: performing the preset processing based on the processing parameters.

3. The method according to claim 2, further comprising at least one of the following:
the candidate cells belonging to the same distributed unit (DU) belonging to a same group;
the candidate cells belonging to different DUs belonging to different groups;
the candidate cells comprising the current serving cell and
wherein before the step S21, the method further comprises: determining whether the processing parameters are to be determined according to the candidate cell grouping information.

4. The method according to claim 3, wherein the step S21 comprises at least one of the following:
in response to that the candidate cell and the current serving cell belong to a same group, using a first set of processing parameters;
in response to that the candidate cell and the current serving cell do not belong to a same group, using a second set of processing parameters;
in response to that the candidate cell and the current serving cell belong to a same group, skip using a measurement hysteresis, and/or a measurement time to trigger, and/or a filter coefficient;
in response to that the candidate cell and the current serving cell belong to a same group, using a measurement hysteresis, and/or a measurement time to trigger, and/or a filter coefficient of a first preset value;
in response to that the candidate cell and the current serving cell belong to different groups, using the measurement hysteresis, and/or the measurement time to trigger, and/or the filter coefficient; and
in response to that the candidate cell and the current serving cell belong to different groups, using the measurement hysteresis, and/or the measurement time to trigger, and/or the filter coefficient of a second preset value.

5. The method according to any one of claims 1 to 4, wherein the step S20 comprises at least one of the following:
for intra-DU cell handover, skip performing radio link control (RLC) reestablishment and/or medium access control (MAC) reset and/or partial MAC reset;
for inter-DU cell handover, performing the RLC reestablishment and/or the MAC reset and/or the partial MAC reset; and
determining whether a candidate cell meets a measurement reporting condition based on the processing parameters, and
in response to that the candidate cell meets the measurement reporting condition, sending a layer 1 (L1) measurement report so that a network device performs inter-cell mobility based on the L1 measurement report and/or issues a command to deactivate or delete the candidate cell.

6. The method according to claim 5, further comprising at least one of the following:
performing L1 or layer 2 (L2) based inter-cell handover according to a handover command; and
skip performing L1 measurement on the candidate cell in response to that the candidate cell is deactivated or deleted according to a deactivation or deletion command.

7. A processing method, **characterized by** comprising:
S10: sending candidate cell grouping information so that a terminal performs preset processing based on the candidate cell grouping information.

8. The method according to claim 7, wherein the step S10 comprises:
sending the candidate cell grouping information so that the terminal determines processing parameters according to the serving cell and the candidate cell grouping information and performs the preset processing based on the processing parameters.

9. The method according to claim 8, further comprising at least one of the following:
the candidate cells belonging to the same DU belong to a same group;
the candidate cells belonging to different DUs belong to different groups;
the candidate cells comprising the current serving cell;
in response to that the candidate cell and the current serving cell belong to a same group, using a first set of processing parameters;
in response to that the candidate cell and the current serving cell do not belong to a same group, using a second set of processing parameters;
in response to that the candidate cell and the current serving cell belong to a same group, skip using a measurement hysteresis, a measurement time to trigger, and a filter coefficient;
in response to that the candidate cell and the current serving cell belong to a same group, using a measurement hysteresis, and/or a measurement time to trigger, and/or a filter coefficient of a first preset value;
in response to that the candidate cell and the current serving cell belong to different groups, using the measurement hysteresis, and/or the measurement time to trigger, and/or the filter coefficient; and
in response to that the candidate cell and the current serving cell belong to different groups, using the measurement hysteresis, and/or the measurement time to trigger, and/or the filter coefficient of a second preset value.

10. The method according to claim 7, further comprising at least one of the following:
issuing a handover command based on a measurement report so that the terminal performs L1 or L2 based inter-cell handover; and
based on the measurement report and/or a neighboring cell relation between the serving cell or the cell to be handed over and the candidate cell or a handover record, issuing a command to deactivate or delete the candidate cell.

11. The method according to claim 10, further comprising at least one of the following:
in response to that the measurement report does not comprise a measurement result of the candidate cell, issuing a command to deactivate or delete the candidate cell;
in response to that the measurement result of the candidate cell is lower than a preset threshold, issuing a command to deactivate or delete the candidate cell;
in response to that the candidate cell is not in a neighboring cell list of a current serving cell or the cell to be handed over, issuing a command to deactivate or delete the candidate cell;
in response to that there is no handover record between the candidate cell and the current serving cell or the cell to be handed over, issuing a command to deactivate or delete the candidate cell; and
in response to that the candidate cell to be deactivated is in the neighboring cell list of the current serving cell or the cell to be handed over, issuing a command to activate the candidate cell; wherein a deactivation or deletion command or activation command is issued through a handover command.

12. A communication device, **characterized by** comprising: a memory and a processor, wherein a processing program is stored in the memory, and when the processing program is executed by the processor, the processing method according to claim 1 or 7 is implemented.

13. A storage medium, **characterized in that** a computer program is stored in the storage medium, and when the computer program is executed by a processor, the processing method according to claim 1 or 7 is implemented.
